# EUROPEAN PATENT APPLICATION

(11) **EP 3 805 652 A1**
(43) Date of publication of application: **14.04.2021**
(21) Application number: 18921884.5
(22) Date of filing: 06.06.2018
(51) Int. Cl.: F24F 7/08

(54) **HEAT EXCHANGING VENTILATION DEVICE**

(71) Applicant: Mitsubishi Electric Corporation, Tokyo 100-8310 (JP)
(72) Inventor: MIYAZAKI, Yuki, Tokyo 100-8310 (JP); AOKI, Hiroki, Tokyo 100-8310 (JP); IWATA, Koji, Tokyo 100-8310 (JP); FUJII, Yoshinori, Tokyo 102-0073 (JP); WATANABE, Yukio, Tokyo 102-0073 (JP)
(74) Representative: Witte, Weller & Partner Patentanwälte mbB
(86) International application number: PCT/JP2018/021782
(87) International publication number: WO 2019/234870

(57) **Abstract**

A heat exchange ventilator (100) includes an air supply blower that creates a supply air flow, an air exhaust blower that creates an exhaust air flow, a heat exchanger that performs heat exchange between the supply air flow and the exhaust air flow, a housing (1) that houses the air supply blower, the air exhaust blower, and the heat exchanger, a first drainage outlet (25) that is at a lower portion of the housing (1) to cause drain water collected in the housing (1) to drain out of the housing when the housing (1) assumes a first posture to have the air supply blower, the heat exchanger, and the air exhaust blower in a horizontal line, and a second drainage outlet (26) that is at a lower portion of the housing (1) to cause drain water held in the housing (1) to drain out of the housing when the housing (1) assumes a second posture to have the air supply blower, the heat exchanger, and the air exhaust blower in a vertical line.

## Description

### Field

The present invention relates to a heat exchange ventilator that ventilates while performing heat exchange between a supply air flow and an exhaust air flow.

### Background

In some cases, a conventional heat exchange ventilator is provided with a drain receiver that holds drain water in order to prevent the drain water from leaking out. The drain water is produced by condensation of moisture included in air which is drawn into a housing of the heat exchange ventilator. The drain water is collected in the drain receiver and then is discharged out of the housing.

Patent Literature 1 discloses a heat exchange ventilator that includes, inside a housing, a drain receiver provided below a heat exchanger. The drain receiver is provided with a communication hole continuous between an interior of the housing and an exterior of the housing, and drain water is discharged through the communication hole.

### Citation List

### Patent Literature

Patent Literature 1: Japanese Patent No. 6150742

### Summary

### Technical Problem

When installed at a ceiling of a house or the like, in order to have a reduced vertical dimension, a heat exchange ventilator is generally installed horizontally having an air supply blower, a heat exchanger, and an air exhaust blower in a horizontal line. On the other hand, when installed on an indoor wall surface, the heat exchange ventilator is installed vertically in some cases to have the air supply blower, the heat exchanger, and the air exhaust blower in a vertical line. Because a choice can be made between the horizontal installation and the vertical installation, the heat exchange ventilator can provide a greater degree of flexibility in the way it is installed.

The drain receiver and the communication hole disclosed in Patent Literature 1 enable discharge of drain water when the heat exchange ventilator is installed horizontally, while if the heat exchange ventilator is installed vertically, drain water cannot be discharged. Therefore, although the technique disclosed in Patent Literature 1 enables a choice to be made between the horizontal installation and the vertical installation when the heat exchange ventilator is installed, the chosen vertical installation problematically does not enable the discharge of drain water.

The present invention has been made in view of the above, and an object of the present invention is to obtain a heat exchange ventilator that can discharge drain water, whether chosen installation is horizontal or vertical.

### Solution to Problem

To solve the above-mentioned problem and achieve the object, a heat exchange ventilator according to the present invention includes an air supply blower that creates a supply air flow, an air exhaust blower that creates an exhaust air flow, a heat exchanger that performs heat exchange between the supply air flow and the exhaust air flow, and a housing to house the air supply blower, the air exhaust blower, and the heat exchanger. The heat exchange ventilator according to the present invention also includes a first drainage outlet that is at a lower portion of the housing to cause drain water collected in the housing to drain out of the housing when the housing assumes a first posture to have the air supply blower, the heat exchanger, and the air exhaust blower in a horizontal line, and a second drainage outlet that is at a lower portion of the housing to cause drain water held in the housing to drain out of the housing when the housing assumes a second posture to have the air supply blower, the heat exchanger, and the air exhaust blower in a vertical line.

### Advantageous Effects of Invention

The heat exchange ventilator according to the present invention is effective in discharging drain water, whether chosen installation is horizontal or vertical.

### Brief Description of Drawings

FIG. 1 illustrates structure of a heat exchange ventilator according to a first embodiment of the present invention.
FIG. 2 is a first plan view of the heat exchange ventilator illustrated in FIG. 1.
FIG. 3 is a second plan view of the heat exchange ventilator illustrated in FIG. 1.
FIG. 4 explains air paths that are included in the heat exchange ventilator illustrated in FIG. 1.
FIG. 5 explains disposition of a heat exchanger that is included in the heat exchange ventilator illustrated in FIG. 1.
FIG. 6 is a perspective view illustrating a first example of the heat exchanger included in the heat exchange ventilator illustrated in FIG. 1.
FIG. 7 is a perspective view illustrating a second example of the heat exchanger included in the heat exchange ventilator illustrated in FIG. 1.
FIG. 8 is a sectional view of the heat exchange ventilator, the section being taken along line VIII-VIII in FIG. 3.
FIG. 9 illustrates the heat exchange ventilator of FIG. 8 that is being installed vertically.
FIG. 10 illustrates structure of a drainage path part of the heat exchange ventilator illustrated in FIG. 8.

### Description of Embodiment

With reference to the drawings, a detailed description is hereinafter provided of a heat exchange ventilator according to an embodiment of the present invention. It is to be noted that this embodiment is not restrictive of the present invention.

### First Embodiment.

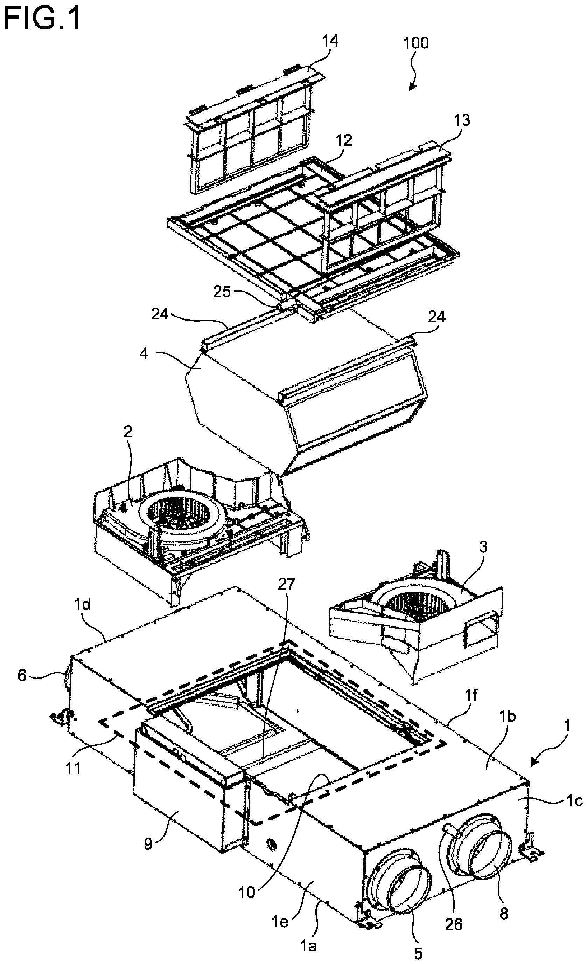

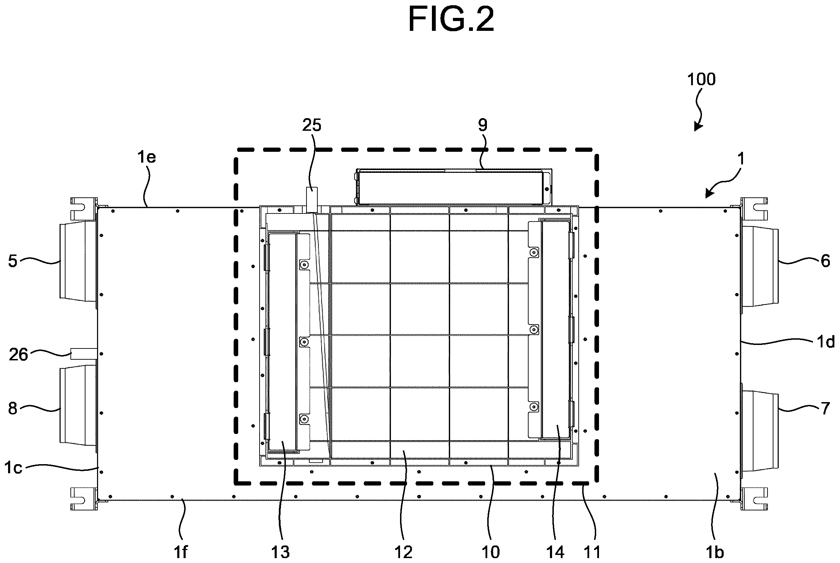

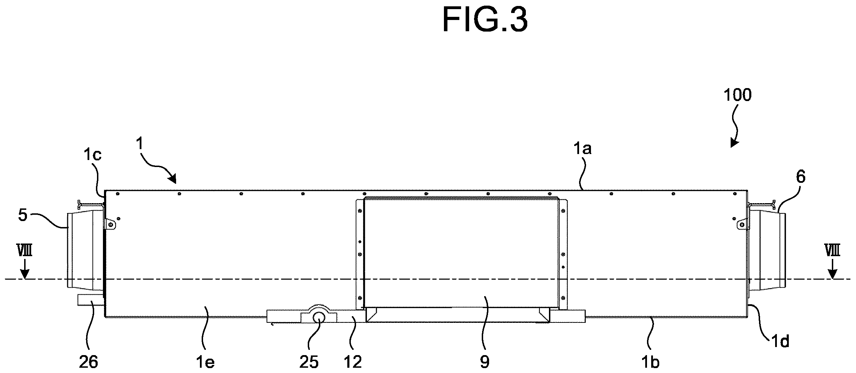

FIG. 1 illustrates structure of the heat exchange ventilator 100 according to the first embodiment of the present invention. FIG. 2 is a first plan view of the heat exchange ventilator 100 illustrated in FIG. 1. FIG. 3 is a second plan view of the heat exchange ventilator 100 illustrated in FIG. 1. The heat exchange ventilator 100 is an apparatus capable of ventilation while performing heat exchange between an exhaust air flow and a supply air flow. FIG. 1 is an exploded perspective view of the heat exchange ventilator 100.

The heat exchange ventilator 100 can be installed either horizontally or vertically. When installed at a ceiling, the heat exchange ventilator 100 is installed horizontally. When hung on a wall surface, the heat exchange ventilator 100 is installed vertically. FIG. 2 illustrates the structure of the horizontally installed heat exchange ventilator 100 as viewed from below. FIG. 3 illustrates the structure of the horizontally installed heat exchange ventilator 100 as viewed from in front.

The heat exchange ventilator 100 performs indoor ventilation by supplying outdoor air into a room and exhausting indoor air outdoors, thus maintaining a comfortable air environment in the room. Moreover, the heat exchange ventilator 100 provides a smaller temperature difference between the air that is drawn into the room and the indoor air by heat exchange between the supply air flow and the exhaust air flow, thereby reducing an indoor air-conditioning load.

The heat exchange ventilator 100 includes an air supply blower 2 that creates the supply air flow, an air exhaust blower 3 that creates the exhaust air flow, a heat exchanger 4 that performs heat exchange between the supply air flow and the exhaust air flow, and a housing 1 housing the air supply blower 2, the air exhaust blower 3, and the heat exchanger 4. The air supply blower 2 draws the outdoor air into the housing 1 and sends indoors the air drawn into the housing 1. The air exhaust blower 3 draws the indoor air into the housing 1 and sends outdoors the air drawn into the housing 1. The housing 1 is provided with a supply air path along which the supply air flow passes and an exhaust air path along which the exhaust air flow passes.

When installed horizontally, the heat exchange ventilator 100 has the air supply blower 2, the heat exchanger 4, and the air exhaust blower 3 in a horizontal line. When installed vertically, the heat exchange ventilator 100 has the air supply blower 2, the heat exchanger 4, and the air exhaust blower 3 in a vertical line. In a description below, a posture which is assumed by the housing 1 when the heat exchange ventilator 100 is installed horizontally is referred to as a first posture, and a posture which is assumed by the housing 1 when the heat exchange ventilator 100 is installed vertically is referred to as a second posture.

The housing 1 is a box of rectangular parallelepiped shape that is composed of six plates 1a, 1b, 1c, 1d, 1e, and 1f. When the housing 1 assumes the first posture, the plate 1a is a part that becomes a top side to face upward. When the housing 1 assumes the first posture, the plate 1b is a part that becomes a bottom side to face downward. The plate 1c, which is a first plate, is a part provided with a supply air inlet 5 and an exhaust air outlet 8. The plate 1d, which is a second plate, is provided with a supply air outlet 6 and an exhaust air inlet 7. The plates 1a and 1b are between the plate 1c and the plate 1d and delineate air paths between the plate 1c and the heat exchanger 4 as well as between the plate 1d and the heat exchanger 4. When the housing 1 assumes the first posture, the plates 1c and 1d become sides to face sideways. The plate 1c defines one lengthwise end of the rectangular parallelepiped shape of the housing 1. The plate 1d defines another lengthwise end of the rectangular parallelepiped shape of the housing 1.

The plates 1e and 1f are parts between the plate 1c and the plate 1d. The plate 1e, which is a third plate, becomes a front side to face forward when the housing 1 assumes the first posture. When the housing 1 assumes the first posture, the plate 1f becomes a back side to face rearward.

The plate 1e is provided with a control device 9 that performs total control of the heat exchange ventilator 100. The control device 9 performs ventilating air volume control for the heat exchange ventilator 100 by controlling driving of the air supply blower 2 and driving of the air exhaust blower 3.

An opening 10 is formed in the plate 1b. The formed opening 10 is below the heat exchanger 4 when the housing 1 assumes the first posture. When the heat exchange ventilator 100 is installed horizontally in a roof space, the ceiling is provided with an inspection door 11 that allows work which accesses the opening 10 and the control device 9 from below the ceiling. An area of the inspection door 11 is indicated by a broken line in FIGS. 1 and 2. Those constituent elements housed in the housing 1 can be attached and detached through the opening 10.

It is to be noted that when the housing 1 assumes the second posture, the plate 1c becomes a bottom side, the plate 1d becomes a top side, the plate 1b becomes a front side, the plate 1a becomes a back side, and the plates 1e and 1f become sides. Vertical installation cases of the heat exchange ventilator 100 possibly include a case where the heat exchange ventilator 100 to install is embedded in a wall of a living room and a case where the heat exchange ventilator 100 to install is hung on an indoor wall surface of a room other than the living room of a building, such as a machine room or a storeroom. By being hung with the opening 10 facing forward, the heat exchange ventilator 100 enables the work which accesses the opening 10 and the control device 9 to be done from in front without involving the inspection door 11. By having the housing 1 in the second posture, the heat exchange ventilator 100 enables work which does not involve the inspection door 11 and thus can improve ease of maintenance work. It is to be noted that when the heat exchange ventilator 100 to install is embedded in the wall, the work which accesses the opening 10 and the control device 9 may possibly involve the inspection door 11 formed at a wall surface.

A drain pan 12, which is a first drain receiver, is disposed below the heat exchanger 4 when the housing 1 is in the first posture. The drain pan 12 collects drain water which is produced in the heat exchanger 4 when the housing 1 is in the first posture. The drain pan 12 closes the opening 10 when mounted to the plate 1b.

In the housing 1, a supply air filter 13 is disposed on a side of the heat exchanger 4 that is closer to the plate 1c. The supply air filter 13 collects dust included in the outdoor air that flows to the supply air path through the supply air inlet 5. In the housing 1, an exhaust air filter 14 is disposed on a side of the heat exchanger 4 that is closer to the plate 1d. The exhaust air filter 14 collects dust included in the indoor air that flows to the exhaust air path through the exhaust air inlet 7. The heat exchange ventilator 100 collects the dust at the supply air filter 13 and the exhaust air filter 14, thereby preventing the dust from clogging up the heat exchanger 4 by adhesion.

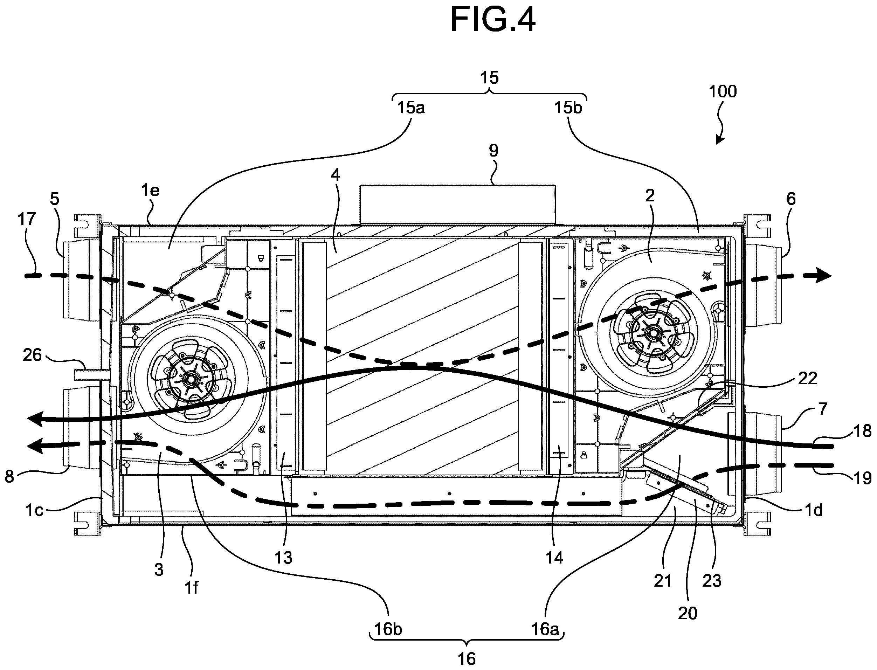

FIG. 4 explains the air paths that are included in the heat exchange ventilator 100 illustrated in FIG. 1. FIG. 4 illustrates internal structure of the housing 1, as viewed from below when the housing 1 is in the first posture.

The heat exchange ventilator 100 includes a damper 20 that switches between heat exchange ventilation and normal ventilation. The heat exchange ventilation is ventilation involving heat exchange between the supply air flow 17 and the exhaust air flow 18. During the heat exchange ventilation, the heat exchange ventilator 100 sends indoors the supply air flow 17 that has exchanged heat with the exhaust air flow 18 in the heat exchanger 4. When an indoor temperature is more agreeable than an outdoor temperature, the heat exchange ventilator 100 causes the outdoor air temperature to approximate to the indoor air temperature by the heat exchange ventilation, thus reducing the air-conditioning load.

The normal ventilation is ventilation not involving heat exchange between the supply air flow 17 and the exhaust air flow 18. During the normal ventilation, the heat exchange ventilator 100 sends indoors the supply air flow 17 that has not exchanged heat with the exhaust air flow 18 in the heat exchanger 4. When the outdoor temperature is more agreeable than the indoor temperature, the heat exchange ventilator 100 sends indoors the outdoor air having the more agreeable temperature by the normal ventilation, thus reducing the air-conditioning load while making the indoor temperature agreeable. The normal ventilation also reduces pressure loss that is caused by passage of the exhaust air flow 18 through the heat exchanger 4 and thus enables the heat exchange ventilator 100 to consume less electric energy. It is to be noted that the exhaust air flow 18 in FIG. 4 is caused during the heat exchange ventilation. A bypass air flow 19 is an exhaust air flow that is caused during the normal ventilation. The housing 1 is provided with the supply air path 15 along which the supply air flow 17 passes and the exhaust air path 16 along which the exhaust air flow 18 and the bypass air flow 19 pass.

The supply air path 15 includes an upstream air path 15a between the supply air inlet 5 and inflow entrances of the heat exchanger 4 for the supply air flow 17, and a downstream air path 15b between the supply air outlet 6 and outflow exits of the heat exchanger 4 for the supply air flow 17. The supply air flow 17 caused by outdoor intake at the supply air inlet 5 passes along the upstream air path 15a, passes through the supply air filter 13 and then flows into the heat exchanger 4. After flowing out of the heat exchanger 4, the supply air flow 17 passes along the downstream air path 15b and is blown into the room from the supply air outlet 6.

The exhaust air path 16 includes an upstream air path 16a between the exhaust air inlet 7 and inflow entrances of the heat exchanger 4 for the exhaust air flow 18 and a downstream air path 16b between the exhaust air outlet 8 and outflow exits of the heat exchanger 4 for the exhaust air flow 18. The exhaust air flow 18 caused by indoor intake at the exhaust air inlet 7 passes along the upstream air path 16a, passes through the exhaust air filter 14 and then flows into the heat exchanger 4. After flowing out of the heat exchanger 4, the exhaust air flow 18 passes along the downstream air path 16b and is blown outdoors from the exhaust air outlet 8.

A bypass air path 21 is an air path provided outside the heat exchanger 4. The upstream air path 16a includes a heat-exchange-side opening 22 that allows passage of the exhaust air flow 18 heading for the heat exchanger 4, and a bypass-side opening 23 that allows passage of the bypass air flow 19 heading for the bypass air path 21. The damper 20 is supported to be rotatable between the heat-exchange-side opening 22 and the bypass-side opening 23. The damper 20, which is a switching unit, performs flow switching between the exhaust air flow 18 heading from the exhaust air inlet 7 to the heat exchanger 4 and the bypass air flow 19 heading from the exhaust air inlet 7 to the bypass air path 21. The control device 9 controls operation of the damper 20 to control the switching between the heat exchange ventilation and the normal ventilation.

For the heat exchange ventilation, the damper 20 closes the bypass-side opening 23. The exhaust air flow 18 from the upstream air path 16a passes through the heat-exchange-side opening 22 to advance to the heat exchanger 4. For the normal ventilation, on the other hand, the damper 20 closes the heat-exchange-side opening 22. The bypass air flow 19 from the upstream air path 16a passes through the bypass-side opening 23 to advance to the bypass air path 21. The exhaust air flow 18, which has passed through the heat exchanger 4, and the bypass air flow 19, which has passed along the bypass air path 21, pass along the downstream air path 16b and advance to the exhaust air outlet 8. A heat insulator 27 illustrated in FIG. 1 is provided for each of the air paths formed in the housing 1 so that condensation does not easily occur.

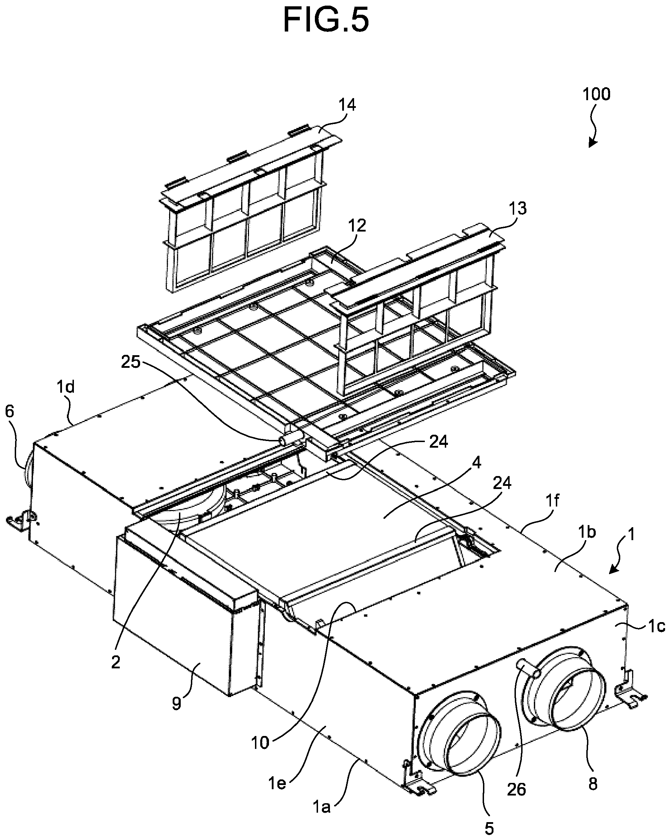

FIG. 5 explains disposition of the heat exchanger 4 included in the heat exchange ventilator 100 illustrated in FIG. 1. FIG. 5 is a perspective view illustrating the heat exchange ventilator 100 with the drain pan 12, the supply air filter 13 and the exhaust air filter 14 removed. The heat exchanger 4 is disposed between the plate 1a and the drain pan 12. In the housing 1, the heat exchanger 4 is located in a lengthwise middle of the housing 1.

For maintenance of the heat exchange ventilator 100, the drain pan 12 is removed from the opening 10, and the supply air filter 13 and the exhaust air filter 14 are taken out of the housing 1 through the opening 10. In addition, the heat exchanger 4, the air supply blower 2, and the air exhaust blower 3 are taken out of the housing 1 through the opening 10. With the housing 1 assuming the first posture, a plurality of presser plates 24 are provided directly under the heat exchanger 4 for preventing the heat exchanger 4 from falling when the maintenance takes place. Since the drain pan 12 is removable from the opening 10, the heat exchanger 4, the air supply blower 2, and the air exhaust blower 3 can be taken out of the housing 1 through the opening 10.

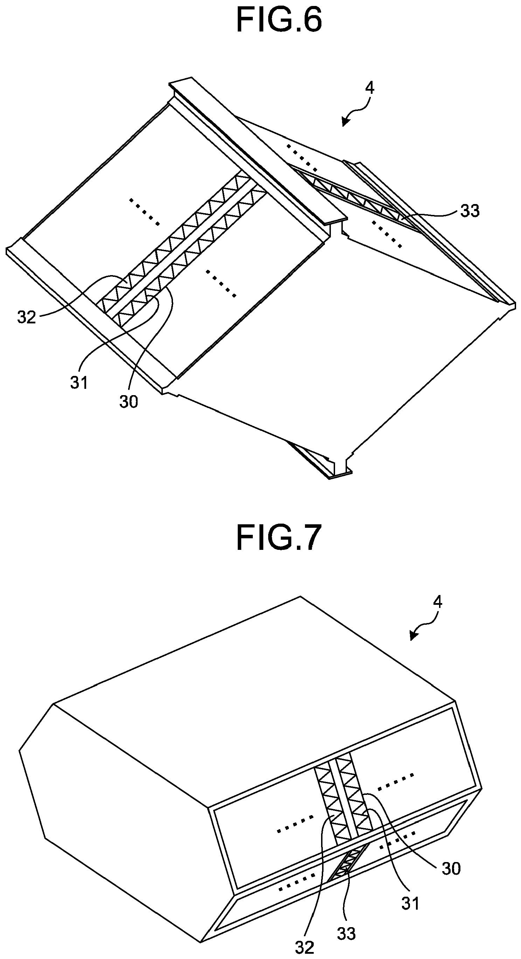

FIG. 6 is a perspective view illustrating a first example of the heat exchanger 4 included in the heat exchange ventilator 100 illustrated in FIG. 1. The first example of the heat exchanger 4 has the shape of a quadrangular prism. The first example of the heat exchanger 4 is a cross-flow heat exchanger in which a direction of the supply air flow 17 and a direction of the exhaust air flow 18 are perpendicular to each other.

The heat exchanger 4 is provided between the supply air path 15 and the exhaust air path 16. The heat exchanger 4 performs total heat exchange between the supply air flow 17 and the exhaust air flow 18. The heat exchanger 4 includes a plurality of partition members 30 spaced apart from one another, and spacing members 31 retaining spaces among the plurality of partition members 30. The heat exchanger 4 is a stack having the partition members 30 and the spacing members 31 in stacked relationship. The partition members 30 are flat sheet members. The spacing members 31 are sheet members with corrugated irregularities. The partition member 30 and the spacing member 31 are joined to each other.

The heat exchanger 4 is disposed so that a stacking direction, which is a direction in which the partition members 30 and the spacing members 31 are stacked, is parallel to the plates 1e and 1f. The heat exchanger 4 may be disposed to have the stacking direction parallel to the plates 1c and 1d.

In the stack, those differently oriented spacing members 31 have their respective corrugation crease directions perpendicular to each other and are stacked with the partition member 30 being in-between. Thus the heat exchanger 4 is alternately provided with, in the stacking direction, primary passages 32 that allow passage of the exhaust air flow 18 and secondary passages 33 that allow passage of the supply air flow 17. Each of the partition members 30 is where sensible heat exchange and latent heat exchange take place between the exhaust air flow 18 passing through the primary passage 32 and the supply air flow 17 passing through the secondary passage 33 without merging the supply air flow 17 and the exhaust air flow 18 together. It is to be noted that the heat exchanger 4 may perform only one of the sensible and latent heat exchanges.

Paper is used for the partition members 30 and the spacing members 31. Since the paper is used for the partition members 30 and the spacing members 31, the heat exchanger 4 enables reduced manufacturing costs. Because the primary passages 32 and the secondary passages 33 are defined with the paper, dew condensation water which is produced by heat exchange can be held in the primary and secondary passages 32 and 33. Moreover, blockages in the air paths that may be caused when dew condensation water which has entered the air paths freezes can be decreased.

FIG. 7 is a perspective view illustrating a second example of the heat exchanger 4 included in the heat exchange ventilator 100 illustrated in FIG. 1. The second example of the heat exchanger 4 has the shape of a hexagonal prism. The second example of the heat exchanger 4 is a counter-flow heat exchanger in which the direction of the supply air flow 17 and the direction of the exhaust air flow 18 are 180 degrees opposite each other. Either of the first example of the heat exchanger 4 or the second example of the heat exchanger 4 may be applied to the heat exchange ventilator 100. The heat exchanger 4 only has to have the shape of a polygonal prism and thus may be of another shape instead of being of hexagonal prism shape or quadrangular prism shape. It is to be noted that the heat exchanger 4 illustrated in FIG. 1 is the second example. Providing the counter-flow heat exchanger 4 enables the heat exchange ventilator 100 to have high heat exchange efficiency for heat transfer.

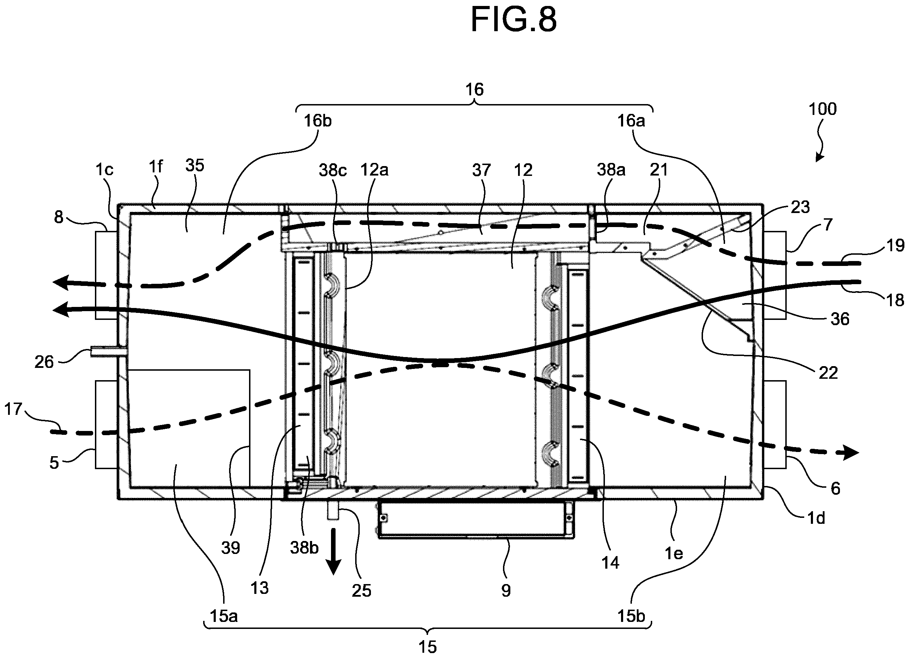

A description is provided next of a drain water discharge setup in the heat exchange ventilator 100. FIG. 8 is a sectional view of the heat exchange ventilator 100, the section being taken along line VIII-VIII in FIG. 3. FIG. 8 illustrates the horizontally installed heat exchange ventilator 100. When the housing 1 assumes the first posture, the plate 1b illustrated in FIG. 2 faces downward. A drain pan 35 as a second drain receiver, a drain pan 36 as a third drain receiver, and a drain pan 37 as a fourth drain receiver are provided on an internal surface of the plate 1b in the housing 1.

The drain pan 35 is disposed below the upstream air path 15a of the supply air path 15 and the downstream air path 16b of the exhaust air path 16 when the housing 1 is in the first posture. The drain pan 35 holds drain water below the upstream and downstream air paths 15a and 16b.

The drain pan 36 is disposed below the upstream air path 16a of the exhaust air path 16 and the downstream air path 15b of the supply air path 15 when the housing 1 is in the first posture. The drain pan 36 holds drain water below the upstream and downstream air paths 16a and 15b.

The drain pan 37 is disposed below the bypass air path 21 when the housing 1 is in the first posture. The drain pan 37 holds drain water below the bypass air path 21. The heat exchange ventilator 100 can hold drain water with the four drain pans 12, 35, 36, and 37. The four drain pans 12, 35, 36, and 37 are connected to one another to form paths for drain water to be discharged out of the housing 1.

A first drainage outlet 25 is at a lower portion of the housing 1 when the housing 1 assumes the first posture. The first drainage outlet 25 causes drain water held in the housing 1 to drain out of the housing 1. The first drainage outlet 25 stands perpendicularly to a lengthwise direction of the housing 1, extending from an end part 12a of the drain pan 12 that is closer to the supply air filter 13. The first drainage outlet 25 stands perpendicularly to the plate 1e. If the first drainage outlet 25 is oriented parallel to the lengthwise direction of the housing 1, the first drainage outlet 25 may interfere with attachment and detachment of the supply air filter 13 or the exhaust air filter 14. Making the first drainage outlet 25 perpendicular to the lengthwise direction of the housing 1 enables the first drainage outlet 25 to be disposed in a manner that does not interfere with the attachment and detachment of the supply air filter 13 or the exhaust air filter 14.

With the housing 1 assuming the first posture, the first drainage outlet 25 is at the same height as the plate 1b. Since the first drainage outlet 25 is provided at such a lowest possible position when the housing 1 is in the first posture, the heat exchange ventilator 100 can promote drainage from the first drainage outlet 25.

A drainage path part 38a of a drainage path is provided at a boundary between the drain pan 36 and the drain pan 37. The drainage path part 38a connects the drain pans 36 and 37 and is formed so that the drain pan 37 is positioned higher than the drain pan 36 when the housing 1 assumes the first posture. The drain water collected in the drain pan 36 passes over the drainage path part 38a to flow into the drain pan 37.

A drainage path part 38c of the drainage path is provided at a boundary between the drain pan 37 and the end part 12a of the drain pan 12. The drainage path part 38c connects the drain pan 37 and the end part 12a and is formed so that the drain pan 37 is positioned higher than the end part 12a when the housing 1 assumes the first posture. The drain water collected in the drain pan 37 passes over the drainage path part 38c to flow into the end part 12a. The drain water that has flowed into the end part 12a is discharged out of the housing 1 through the first drainage outlet 25.

A drainage path part 38b of a drainage path is provided at a boundary between the drain pan 35 and the end part 12a of the drain pan 12. The drainage path part 38b is provided between the supply air filter 13 and the plate 1e. The drainage path part 38b connects the drain pan 35 and the end part 12a and is formed so that the drain pan 35 is positioned higher than the end part 12a when the housing 1 assumes the first posture. The drain water collected in the drain pan 35 passes over the drainage path part 38b to flow into the end part 12a. The drain water that has flowed into the end part 12a is discharged out of the housing 1 through the first drainage outlet 25.

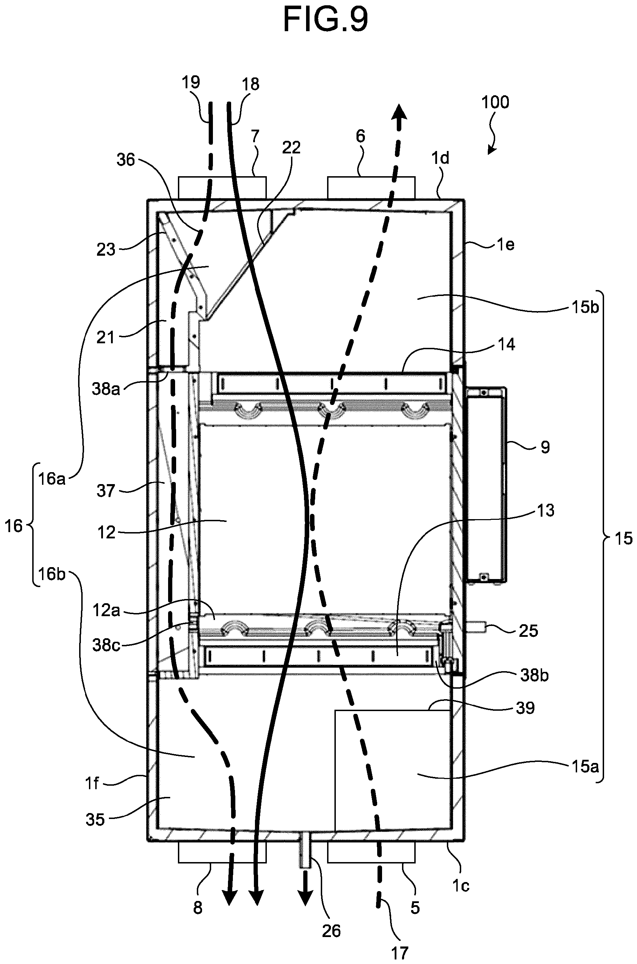

FIG. 9 illustrates the heat exchange ventilator 100 of FIG. 8 that is being installed vertically. A section illustrated by FIG. 9 is identical with a section illustrated by FIG. 8. When the housing 1 assumes the second posture, the plate 1c faces downward. A second drainage outlet 26 is at a lower portion of the housing 1 when the housing 1 is in the second posture. The second drainage outlet 26 causes drain water held in the housing 1 to drain out of the housing 1. The second drainage outlet 26 is provided at the plate 1c and is adjacent to the drain pan 35. The second drainage outlet 26 stands perpendicularly to the plate 1c. A direction in which the first drainage outlet 25 stands extending from the housing 1 and a direction in which the second drainage outlet 26 stands extending from the housing 1 are perpendicular to each other.

Because the housing 1 is in the second posture, the drain water produced in the housing 1 moves downward. Drain water flows downward along a wall part defining each of the air paths or along each of the drain pans 12, 35, 36, and 37 or falls away from the wall part and each of the drain pans 12, 35, 36, and 37. The drain water that has reached the plate 1c is discharged out of the housing 1 through the second drainage outlet 26. The housing 1 may be internally provided with another drain pan or a structure that prevents leakage of the drain water on the plate 1c. The supply air inlet 5 and the exhaust air outlet 8 may be provided with, at their respective ends internal to the housing 1, a structure that dams the drain water. Thus the drain water that has reached the plate 1c can be drained from the second drainage outlet 26 without leaking out.

Next, a description of discharge of drain water which is caused by indoor air and discharge of drain water which is caused by outdoor air is provided based on the FIG. 8 first posture and the FIG. 9 second posture of the housing 1 separately.

When humid indoor air has entered the upstream air path 16a through the exhaust air inlet 7 with the housing 1 in the first posture, condensed water in the upstream air path 16a is held in the drain pan 36. The drain water collected in the drain pan 36 passes over the drainage path part 38a to flow into the drain pan 37. The drain water that has flowed into the drain pan 37 passes over the drainage path part 38c to flow into the end part 12a. The drain water that has flowed into the end part 12a is discharged out of the housing 1 through the first drainage outlet 25. Condensed water produced in the downstream air path 16b after passage through the heat exchanger 4 is held in the drain pan 35. The drain water collected in the drain pan 35 passes over the drainage path part 38b and is discharged out of the housing 1 through the first drainage outlet 25.

When humid outdoor air has entered the upstream air path 15a through the supply air inlet 5 with the housing 1 in the first posture, condensed water in the upstream air path 15a is held in the drain pan 35. The drain pan 35 is formed with a partition part 39 that serves as a partition between the upstream air path 15a and the downstream air path 16b. Because of the partition part 39 provided, condensed water in the downstream air path 16b advances to the drainage path part 38b without being mixed with the condensed water in the upstream air path 15a. When the outdoor air is humid, it is assumed to have become temporarily humid outdoors due to fog, for example. The heat exchange ventilator 100 may cause condensed water in the upstream air path 15a to be retained in the drain pan 35 and evaporate the water by ventilating operation.

When humid outdoor air has entered the bypass air path 21 with the heat exchange ventilator 100 in the first posture, condensed water in the bypass air path 21 is held in the drain pan 37. The drain water collected in the drain pan 37 passes over the drainage path part 38c and along the end part 12a and is discharged out of the housing 1 through the first drainage outlet 25.

Drain water which is produced by condensation in the heat exchanger 4 is held in the drain pan 12. The drain water collected in the drain pan 12 passes along the end part 12a and is discharged out of the housing 1 through the first drainage outlet 25.

Thus the heat exchange ventilator 100 causes drain water produced in each of the air paths and drain water produced in the heat exchanger 4 to advance to the first drainage outlet 25 to be discharged out of the housing 1. When the housing 1 assumes the first posture, a water shut-off component may be mounted to the second drainage outlet 26 to shut off drain water. In this way, the drain water can be prevented from leaking out through the second drainage outlet 26.

The heat exchange ventilator 100 is provided with the drain pan 12 below the heat exchanger 4. In addition, each of its air paths is provided with the drain pan 35, 36, or 37, so that drain water which is caused when humid air is drawn into the housing 1 can be held below each of the air paths.

When humid indoor air has entered the upstream air path 16a through the exhaust air inlet 7 with the housing 1 in the second posture, condensed water in the upstream air path 16a flows downward along the wall part, which defines each of those air paths that are below the upstream air path 16a, or along each of the drain pans 12, 35, 36, and 37 or falls. The drain water that has reached the plate 1c is discharged out of the housing 1 through the second drainage outlet 26.

When humid outdoor air has entered the upstream air path 15a through the supply air inlet 5 with the housing 1 in the second posture, condensed water in the upstream air path 15a flows downward along the drain pan 35 or the wall part defining the upstream air path 15a or falls. The drain water that has reached the plate 1c is discharged out of the housing 1 through the second drainage outlet 26.

When humid outdoor air has entered the bypass air path 21 with the housing 1 in the second posture, condensed water in the bypass air path 21 flows along the drain pans 37 and 35 or the wall part defining the bypass air path 21 and the downstream air path 16b or falls. The drain water that has reached the plate 1c is discharged out of the housing 1 through the second drainage outlet 26.

Drain water which is produced by condensation in the heat exchanger 4 passes through the heat exchanger 4 and advances to the upstream air path 15a and the downstream air path 16b. The drain water flows downward along the drain pan 35 or the wall part defining the upstream and downstream air paths 15a and 16b or falls.
The drain water that has reached the plate 1c is discharged out of the housing 1 through the second drainage outlet 26.

Thus the heat exchange ventilator 100 causes drain water produced in each of the air paths and drain water produced in the heat exchanger 4 to advance to the second drainage outlet 26 to be discharged out of the housing 1. When the housing 1 assumes the second posture, a water shut-off component may be mounted to the first drainage outlet 25. In this way, the drain water can be prevented from leaking out through the first drainage outlet 25.

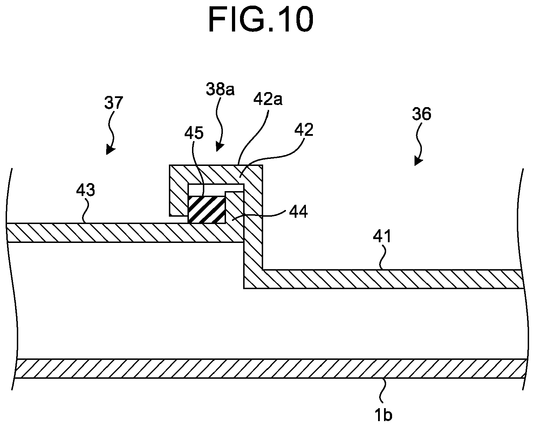

FIG. 10 illustrates structure of the drainage path part of the heat exchange ventilator 100 illustrated in FIG. 8. FIG. 10 illustrates a section of the drainage path part 38a among the drainage path parts 38a, 38b, and 38c illustrated in FIG. 8. The drain pan 36 and the drain pan 37 are two adjacent drain pans. The drain pan 36, which is one of the two drain pans, includes a base 41 to collect drain water, and a projecting part 42 that stands extending from the base 41. The projecting part 42 is formed at an end of the drain pan 36 that is closer to the drain pan 37 and defines a boundary between the drain pan 36 and the drain pan 37. The drain pan 37, which is the other one of the two drain pans, includes a base 43 to collect drain water, and a projecting part 44 that stands upright extending from the base 43. The projecting part 44 is formed at an end of the drain pan 37 that is closer to the drain pan 36 and defines a boundary between the drain pan 37 and the drain pan 36.

The projecting part 42 of the drain pan 36 includes a bend to enfold the end of the drain pan 37 that is formed with the projecting part 44. A water seal 45 is provided between the projecting part 42 and the projecting part 44. The drainage path part 38a has the projecting part 44 and the water seal 45 fit within the bend of the projecting part 42 and thus is capable of preventing leakage of drain water.

When the housing 1 assumes the first posture, drain water can be collected in the drain pan 36, starting from the base 41 up to an edge 42a of the projecting part 42 that is opposite from the base 41. When having overflowed into the edge 42a of the drain pan 36, the drain water flows into the drain pan 37 from the edge 42a.

The drainage path parts 38b and 38c are similar in structure to the drainage path part 38a. At the drainage path part 38b provided at the boundary between the drain pan 12 and the drain pan 35, the drain pan 35 is similar in structure to the drain pan 36 illustrated in FIG. 10. At the drainage path part 38b, the drain pan 12 is similar in structure to the drain pan 37 illustrated in FIG. 10. At the drainage path part 38c provided at the boundary between the drain pan 37 and the drain pan 12, the drain pan 37 is similar in structure to the drain pan 36 illustrated in FIG. 10. At the drainage path part 38c, the drain pan 12 is similar in structure to the drain pan 37 illustrated in FIG. 10. Thus each of the drainage path parts 38a, 38b, and 38c can prevent leakage of drain water.

The drain pan 12 has a reduced size in order to pass through the opening 10 and the inspection door 11 that are illustrated in FIG. 1. Therefore, the size of the drain pan 12 is difficult to increase in order for this one drain pan 12 below the heat exchanger 4 to catch condensed water in each of the air paths when the housing 1 is in the first posture. In the first embodiment, the heat exchange ventilator 100 has each air path provided with the drain pan 35, 36, or 37 and can hold drain water in the housing 1 with the drain pan 12 and the drain pans 35, 36, and 37. Thus the heat exchange ventilator 100 can hold drain water in the housing 1 even when installed in a humid environment. Because the drainage paths are formed by the drain pan 12 and the drain pans 35, 36, and 37, the heat exchange ventilator 100 having each air path provided with the drain pan 35, 36, or 37 can promote drainage of drain water.

The heat exchange ventilator 100 according to the first embodiment includes the first drainage outlet 25 that is at the lower portion of the housing 1 when the housing 1 assumes the first posture, and the second drainage outlet 26 that is at the lower portion of the housing 1 when the housing 1 assumes the second posture. The heat exchange ventilator 100 can discharge drain water collected in the housing 1 out of the housing 1, whether chosen installation is horizontal or vertical. Because a choice can be made between the horizontal installation and the vertical installation, the heat exchange ventilator 100 can provide a greater degree of flexibility in the way it is installed. Therefore, whether chosen installation is horizontal or vertical, the heat exchange ventilator 100 is effective in discharging drain water.

The above structures illustrated in the embodiment are illustrative of contents of the present invention, can be combined with other techniques that are publicly known and can be partly omitted or changed without departing from the gist of the present invention.

### Reference Signs List

1 housing; 1a, 1b, 1c, 1d, 1e, 1f plate; 2 air supply blower; 3 air exhaust blower; 4 heat exchanger; 5 supply air inlet; 6 supply air outlet; 7 exhaust air inlet; 8 exhaust air outlet; 9 control device; 10 opening; 11 inspection door; 12, 35, 36, 37 drain pan; 12a end part; 13 supply air filter; 14 exhaust air filter; 15 supply air path; 15a, 16a upstream air path; 15b, 16b downstream air path; 16 exhaust air path; 17 supply air flow; 18 exhaust air flow; 19 bypass air flow; 20 damper; 21 bypass air path; 22 heat-exchange-side opening; 23 bypass-side opening; 24 presser plate; 25 first drainage outlet; 26 second drainage outlet; 27 heat insulator; 30 partition member; 31 spacing member; 32 primary passage; 33 secondary passage; 38a, 38b, 38c drainage path part; 39 partition part; 41, 43 base; 42, 44 projecting part; 42a edge; 45 water seal; 100 heat exchange ventilator.

## Claims

1. A heat exchange ventilator comprising:
an air supply blower to create a supply air flow;
an air exhaust blower to create an exhaust air flow;
a heat exchanger to perform heat exchange between the supply air flow and the exhaust air flow;
a housing to house the air supply blower, the air exhaust blower, and the heat exchanger;
a first drainage outlet being at a lower portion of the housing to cause drain water collected in the housing to drain out of the housing when the housing assumes a first posture to have the air supply blower, the heat exchanger, and the air exhaust blower in a horizontal line; and
a second drainage outlet being at a lower portion of the housing to cause drain water held in the housing to drain out of the housing when the housing assumes a second posture to have the air supply blower, the heat exchanger, and the air exhaust blower in a vertical line.

2. The heat exchange ventilator according to claim 1, wherein
the housing includes:
a first plate including a supply air inlet and an exhaust air outlet;
a second plate including a supply air outlet and an exhaust air inlet; and
a third plate being between the first plate and the second plate, the third plate being a side when the housing assumes the first posture, and
the first drainage outlet stands perpendicularly to the third plate.

3. The heat exchange ventilator according to claim 1, wherein
the housing includes:
a first plate including a supply air inlet and an exhaust air outlet; and
a second plate including a supply air outlet and an exhaust air inlet, and
the second drainage outlet stands perpendicularly to the second plate.

4. The heat exchange ventilator according to claim 2 or 3, further comprising:
a first drain receiver being below the heat exchanger when the housing assumes the first posture;
a second drain receiver being below an air path between the supply air inlet and the heat exchanger when the housing assumes the first posture; and
a third drain receiver being below an air path between the exhaust air inlet and the heat exchanger when the housing assumes the first posture.

5. The heat exchange ventilator according to claim 4, further comprising:
a switching unit to perform path switching for the exhaust air flow between a path extending from the exhaust air inlet to the heat exchanger and a bypass air path that is an air path extending from the exhaust air inlet to the exhaust air outlet while circumventing the heat exchanger; and
a fourth drain receiver being below the bypass air path in the first posture, wherein
the first drain receiver, the second drain receiver, the third drain receiver, and the fourth drain receiver form drainage paths for drain water.

6. The heat exchange ventilator according to claim 5, wherein at a boundary between adjacent two of the first, second, third, and fourth drain receivers, one of the adjacent two drain receivers is positioned higher than another of the adjacent two drain receivers in the first posture.

7. The heat exchange ventilator according to claim 6, wherein
each of the adjacent two drain receivers includes a recess to collect drain water, and a projecting part standing, extending from the recess and defining the boundary, and
the projecting part of the other drain receiver is engaged within a bend of the projecting part of the one drain receiver.

8. The heat exchange ventilator according to claim 7, wherein
the one drain receiver is the second drain receiver, and
the other drain receiver is the first drain receiver.

9. The heat exchange ventilator according to claim 7, wherein
the one drain receiver is the third drain receiver, and
the other drain receiver is the fourth drain receiver.

10. The heat exchange ventilator according to claim 7, wherein
the one drain receiver is the fourth drain receiver, and
the other drain receiver is the first drain receiver.
